# EUROPEAN PATENT APPLICATION

(11) **EP 4 546 626 A1**
(43) Date of publication of application: **30.04.2025**
(21) Application number: 23884255.3
(22) Date of filing: 30.06.2023
(51) Int. Cl.: H02K 33/00, G02B 7/09, H04N 5/222

(54) **CAMERA MOTOR, CAMERA MODULE AND ELECTRONIC DEVICE**

(30) Priority: 31.10.2022 CN 202211347960
(71) Applicant: Huawei Technologies Co., Ltd., Shenzhen, Guangdong 518129 (CN)
(72) Inventor: FU, Qianyan, Shenzhen, Guangdong 518129 (CN); KUO, Li-Te, Shenzhen, Guangdong 518129 (CN); ZHAO, Xuhui, Shenzhen, Guangdong 518129 (CN); DING, Ruiming, Shenzhen, Guangdong 518129 (CN); HUANG, Jinhao, Shenzhen, Guangdong 518129 (CN); LU, Lei, Shenzhen, Guangdong 518129 (CN)
(74) Representative: MERH-IP Matias Erny Reichl Hoffmann Patentanwälte PartG mbB
(86) International application number: PCT/CN2023/104474
(87) International publication number: WO 2024/093316

(57) **Abstract**

A camera motor, a camera module, and an electronic device are provided. The camera motor includes a base, a drive unit, and a movable component. An elastic member is disposed between the movable component and the base. Under an action of an external force and the elastic member, the movable component is capable of switching between a retraction position that is close to the base and an ejection position that is away from the base, where the external force includes a force applied to the movable component in a direction toward the base. The drive unit is configured to drive the movable component at the ejection position to reciprocate relative to the base. **In** this way, a stroke of the movable component is divided into an ejection stroke and a focusing stroke. This can reduce power consumption of the drive unit, and improve a moving speed during focusing and imaging quality.

## Description

This application claims priority to Chinese Patent Application No. 202211347960.6, filed with the China National Intellectual Property Administration on October 31, 2022 and entitled "CAMERA MOTOR, CAMERA MODULE, AND ELECTRONIC DEVICE", which is incorporated herein by reference in its entirety.

### TECHNICAL FIELD

This application relates to the field of electronic device technologies, and in particular, to a camera motor, a camera module, and an electronic device.

### BACKGROUND

With development of science and technology, electronic devices such as mobile phones or tablet computers need to extend available space of camera modules through telescopic mechanisms for higher imaging quality. This imposes a higher requirement on motors of the camera modules.

In an existing camera motor, a spring plate is usually used as a support structure of a movable part, to implement positioning through a balance between an elastic force obtained when the spring plate is deformed and a driving force. However, the spring plate brings a large pulling force at a far end of a stroke, affecting a motor moving speed during focusing, and causing high power consumption. In addition, due to elasticity of the spring plate, the spring motor causes a tremor of a lens carrier during a process in which an electronic device is held by a hand to perform video recording, which affects imaging quality.

### SUMMARY

This application provides a camera motor, a camera module, and an electronic device, to optimize a structure of the camera motor, reduce power consumption of the motor, and increase a motor moving speed during focusing.

A first aspect of this application provides a camera motor, including a base, a drive unit, and a movable component. An elastic member is disposed between the movable component and the base. Specifically, one end of the elastic member may be fastened to the base, and the other end is a free end, provided that the free end abuts against the movable component. Under an action of an external force and the elastic member, the movable component is capable of switching between a retraction position that is close to the base and an ejection position that is away from the base, where the external force includes a force applied to the movable component in a direction toward the base. When the external force applied to the movable component in the direction toward the base is greater than an elastic force of the elastic member, the movable component moves toward the base and is at the retraction position that is close to the base. In this case, the elastic member is in a compressed state. When the external force applied to the movable component in the direction toward the base is canceled or reduced, the movable component may move in a direction away from the base under an action of the elastic member, and is at the ejection position. The drive unit is configured to drive the movable component at the ejection position to reciprocate relative to the base.

When the camera motor provided in this application is not started, the movable component is at the retraction position that is close to the base under an action of the external force. During working, the external force is canceled or reduced, so that the movable component can move in the direction away from the base under an action of the elastic force, to reach the preset ejection position, and then the drive unit drives the movable component to reciprocate relative to the base, to implement focusing. In this way, a stroke of the movable component is divided into an ejection stroke and a focusing stroke. The ejection stroke depends on the action of the external force and the elastic member, and the focusing stroke depends on an action of the drive unit. In this way, power consumption of the drive unit can be reduced, and the focusing stroke does not depend on the elastic member, so that a moving speed during focusing can be increased, a video recording tremor can be prevented, and imaging quality can be improved.

In a possible implementation, the camera motor further includes a guiding mechanism. The guiding mechanism is configured to guide reciprocation of the movable component, so that the movable component moves in a direction parallel to an optical axis of a camera lens. In other words, a direction of reciprocation of the movable component is parallel to the optical axis of the camera lens. This helps transmit light in the optical axis during image shooting, and improves imaging quality.

In another possible implementation, the guiding mechanism includes at least one guiding assembly. The guiding assembly includes a first guiding part and a second guiding part, where one of the first guiding part and the second guiding part is fastened relative to the movable component, the other is fastened relative to the base. The first guiding part and the second guiding part abut against each other, and the first guiding part and the second guiding part are capable of sliding relative to each other in the direction parallel to the optical axis. When the movable component reciprocates relative to the base, a movement direction of the movable component is limited by abutting of the first guiding part and the second guiding part, to ensure focusing reliability.

In another possible implementation, the second guiding part is a shaft member, and an axis direction of the shaft member is parallel to the optical axis. The shaft member is used as a guiding supporting member. This helps improve guiding reliability. Alternatively, the second guiding part includes several balls, and the several balls are arranged in the direction parallel to the optical axis. Contact between the first guiding part and the balls is point contact through ball guidance, so that friction can be reduced, and a favorable condition is provided for a quick response to focusing.

In another possible implementation, the guiding mechanism is provided with two guiding assemblies, and the two guiding assemblies are respectively located at two diagonal parts of the movable component. In this arrangement, an action of the movable component is more stable. This helps ensure reliability of a focusing action of the movable component.

In another possible implementation, in the two guiding assemblies, a 1^{st} first guiding part includes a first wall and a second wall, a 1^{st} second guiding part abuts against both the first wall and the second wall, a 2^{nd} first guiding part includes a third wall, and a 2^{nd} second guiding part abuts against the third wall.

For example, the 1^{st} first guiding part may be a V-shaped groove. Two groove walls of the V-shaped groove are used as the first wall and the second wall and abut against the 1^{st} second guiding part at the same time, to avoid a position offset of the second guiding part, and implement precise guiding of an action of the movable component. The 2^{nd} first guiding part may be a planar structure or a U-shaped groove. Any groove wall of the planar structure or the U-shaped groove is used as the third wall and abuts against the 2^{nd} second guiding part. In this way, a proper offset is allowed between the second guiding part and the first guiding part, to implement coarse positioning. A combination of guiding forms of the V-shaped groove and the U-shaped groove can ensure guiding precision and reduce processing and fitting precision of related components.

In another possible implementation, in the two guiding assemblies, a connection line between centers of the two second guiding parts passes through a center of the optical axis. In this way, it can be ensured that the movable component moves in a direction of the optical axis, to help improve imaging quality.

In another possible implementation, there is a magnetic attraction force between the first guiding part and the second guiding part, so that the first guiding part is closely attached to the second guiding part. In this way, in the action process of the movable component, the first guiding part is always closely attached to the second guiding part under an action of the magnetic attraction force. This can improve guiding effect, and can also ensure that a position of the movable component is stable and does not deviate from the optical axis in the action process.

In another possible implementation, the guiding assembly further includes a magnetic conductive member and a magnetic attraction magnet, and the magnetic attraction force is generated between the magnetic conductive member and the magnetic attraction magnet. One of the magnetic conductive member and the magnetic attraction magnet is disposed on the movable component, and the other is disposed on the base. Alternatively, the second guiding part is a component having magnetic conductive performance. The magnetic attraction magnet is fastened relative to the first guiding part. Relative positions of the magnetic conductive member and the magnetic attraction magnet or relative positions of the second guiding part having magnetic conductive performance and the magnetic attraction magnet determines a direction of a magnetic attraction force applied to the first guiding part. Theoretically, the direction of the magnetic attraction force is not limited, provided that the first guiding part and the second guiding part can be attracted to be closely attached.

In another possible implementation, the drive unit includes a drive magnet and a coil component, one of the drive magnet and the coil component is fastened relative to the movable component, the other is fastened relative to the base, and a position of the coil component corresponds to a position of the drive magnet. In other words, the drive unit is in a form of a voice coil motor. During working, after the coil component is energized, a moving charge is subject to a Lorentz force in a magnetic field of the drive magnet, and the force is a driving force for driving the movable component to move.

In another possible implementation, the drive magnet is fastened relative to the base, the coil component is fastened relative to the movable component, the drive magnet includes a first magnet and a second magnet, the second magnet supports the first magnet, and a step surface facing away from the base is formed between the second magnet and the first magnet. In other words, a face that is of the second magnet and that faces the first magnet includes a face supporting the first magnet, and further includes a face extending to the outside of the first magnet. The face extending to the outside of the first magnet forms the step surface of the drive magnet. The camera motor further includes a housing. The housing is fastened relative to the base, and may cover the drive magnet. The housing has a housing shoulder surface fitting with the step surface, and the housing can protect a related component of the camera motor. Fitting configuration of the step surface and the shoulder surface of the drive magnet and the housing helps reduce a volume of the housing.

In another possible implementation, the drive unit is an SMA driver or a piezoelectric ceramic driver.

In another possible implementation, the camera motor further includes the housing. The housing is fastened relative to the base, the housing has an opening, and the movable component is capable of extending out of the opening in reciprocation. In this disposing manner, the housing can be prevented from limiting a stroke amount of the movable component.

In another possible implementation, the drive unit provides the external force for pressing against the movable component in the direction toward the base, so that an additional structure that generates the external force can be avoided. This helps simplify the structure.

A second aspect of this application further provides a camera module, including a camera lens and a camera motor. The camera motor is the camera motor mentioned in the first aspect. The camera lens is mounted on a movable component of the camera motor, and the camera lens acts with the movable component to implement focusing.

A third aspect of this application further provides an electronic device, including a housing and a camera module. The camera module is the camera module provided in the second aspect, and the camera module is mounted in the housing. The electronic device may be a mobile phone, a tablet computer, or the like.

In a possible implementation, the electronic device further includes a member and a drive component. The drive component generates, through the member, an external force applied to a movable component, to press against the movable component in a direction toward a base to be at a retraction position.

### BRIEF DESCRIPTION OF DRAWINGS

FIG. 1 is a principle diagram of a structure of a camera motor in a first state according to an embodiment of this application;
FIG. 2 is a principle diagram of a structure of the camera motor shown in FIG. 1 in a second state;
FIG. 3 is an exploded view of a camera motor according to an embodiment of this application;
FIG. 4 is a diagram of a structure of a camera motor without a housing according to an embodiment of this application;
FIG. 5 is a diagram of a principle of a guiding mechanism in a specific application;
FIG. 6 is a diagram of a structure of a base in FIG. 4;
FIG. 7 is a diagram of a structure of an elastic member in a specific application;
FIG. 8 is a diagram of a structure of another elastic member in a specific application;
FIG. 9 is a diagram of a structure of a camera motor without a housing according to another embodiment of this application; and
FIG. 10 is a diagram of a structure of a camera motor without a housing according to another embodiment of this application.

### DESCRIPTION OF EMBODIMENTS

Embodiments of this application provide a camera motor, a camera module including the camera motor, and an electronic device in which the camera module is used. The camera motor is disposed, so that a camera lens of the camera module is telescopic, to have a longer focusing stroke. A structure of the camera motor is optimized, to reduce motor power consumption, improve a motor moving speed during focusing, and obtain higher-quality imaging effect.

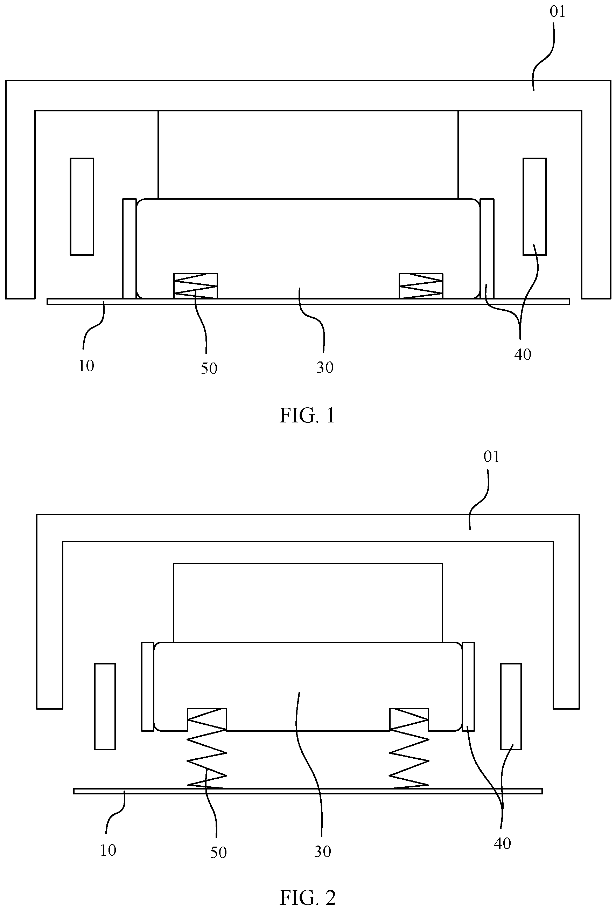

FIG. 1 and FIG. 2 are respectively principle diagrams of structures of a camera motor in a first state and a second state. The first state is a state in which a movable component of the camera motor is in a retraction position, and the second state is a state in which the movable component of the camera motor is in an ejection position. FIG. 1 and FIG. 2 are principle diagrams of actions of the camera motor. The diagrams show only a position relationship and an action relationship between related components, and do not show an actual structure and shape of each component of the camera motor.

In this implementation, the camera motor includes a base 10, a movable component 30, and a drive unit 40.

When the camera motor is used in an electronic device, the base 10 may be fastened relative to a housing of the electronic device, and the base 10 may be considered as a fastener. An elastic member 50 is disposed between the movable component 30 and the base 10. When the movable component 30 is used in the camera module, a camera lens of the camera module may be mounted on the movable component 30, and the camera lens is driven to move through movement of the movable component 30, to implement focusing.

Under an action of an external force and the elastic member 50, the movable component 30 is capable of switching between a retraction position that is close to the base 10 and an ejection position that is away from the base 10. The external force includes a force applied to the movable component 30 in a direction toward the base 10. In application scenarios shown in FIG. 1 and FIG. 2, the external force is provided by a member 01 and a drive component (not shown in the figure) of the electronic device. Specifically, the movable component 30 is located between the base 10 and the member 01, and the drive component may apply a retraction force to the member 01, so that the member 01 moves in a direction toward the base 10 to press against the movable component 30 in the direction toward the base 10, and the movable component 30 is in the retraction position. The retraction force applied by the drive component may be canceled, or a driving force may be applied to the member 01, so that the member 01 is away from the movable component 30, and the movable component 30 moves in a direction away from the base 10 under an action of a recovery force of the elastic member 50, to be in the ejection position.

The drive component is not shown in FIG. 1 and FIG. 2, and may be a conventional drive component, for example, a micro linear motor.

As shown in FIG. 1, at the retraction position, the member 01 presses against the movable component 30 to the base 10. Because the base 10 is relatively fixed, when the member 01 moves in the direction close to the base 10, after contacting the movable component 30, the member 01 drives the movable component 30 to move in the direction toward the base 10, and compresses the elastic member 50 between the movable component 30 and the base 10. In this case, the retraction force applied by the drive component to the member 01 is greater than an elastic force of the elastic member 50, so that the member 01 can be maintained at the retraction position, and the movable component 30 drives the camera lens to be maintained at the retraction position close to the base 10.

When the member 01 at the retraction position shown in FIG. 1 is driven by the driving force of the drive component to move in a direction away from the base 10, or when the drive component does not apply a force to the member 01, pressure applied by the member 01 to the movable component 30 is reduced, and the elastic reset force of the elastic member 50 is combined, so that the movable component 30 drives the camera lens to also move in the direction away from the base 10 to the preset ejection position. In this case, the elastic member 50 is in an extended state, as shown in FIG. 2. It may be understood that, that the elastic member 50 is in the extended state herein is described relative to a compressed state shown in FIG. 1, and does not mean that the elastic member 50 is definitely in a stretched state.

In actual application, when the member 01 is at the ejection position, the pressure of the member 01 on the movable component 30 may be zero or may not be zero, provided that the member 01 fits with the elastic member 50 to enable the movable component 30 to eject relative to the base 10. The "preset ejection position" is related to the elastic force of the elastic member 50 and the pressure of the member 01 on the movable component 30 obtained when the member 01 is at the ejection position, and may be set based on a requirement.

The drive unit 40 is configured to drive the movable component 30 at the ejection position to reciprocate relative to the base 10, to drive the camera lens to act to implement focusing.

When the camera module stops working, the drive unit 40 stops working, and the member 01 may move in the direction toward the base 10 under an action of the drive component, and drive the movable component 30 to move to the retraction position shown in FIG. 1.

After the foregoing setting, a stroke of the movable component 30 is divided into an ejection stroke and a focusing stroke. In the ejection stroke phase, the movable component 30 acts depending on the drive component and the elastic member 40. In the focusing stroke phase, the movable component 30 acts depending on the drive unit 40. This reduces power consumption of the drive unit 40, and does not depend on an action of the elastic member 40 in the focusing phase, so that a moving speed during focusing can be increased, a video recording tremor can be prevented, and imaging quality can be improved.

In addition, because the movable component 30 has the ejection stroke, and in the ejection stroke phase, power consumption of the drive unit 40 is zero, the drive unit 40 does not need to be changed. This avoids an increase in a volume or a size of the drive unit 40 due to an increase in the stroke of the movable component 30, and facilitates a miniaturization design of the camera module.

FIG. 1 and FIG. 2 show two elastic members 50 as examples. In actual application, a quantity and an arrangement of the elastic members 50 may be set as required.

In another implementation, the external force applied to the movable component 30 in the direction toward the base 10 may not be provided by the member 01 and the drive component matching the member 01, but is provided by the drive unit 40 of the camera motor, to simplify a structure setting.

The foregoing describes a working principle of the camera motor in this implementation. The following further describes a specific structure of the camera motor with reference to a specific application example.

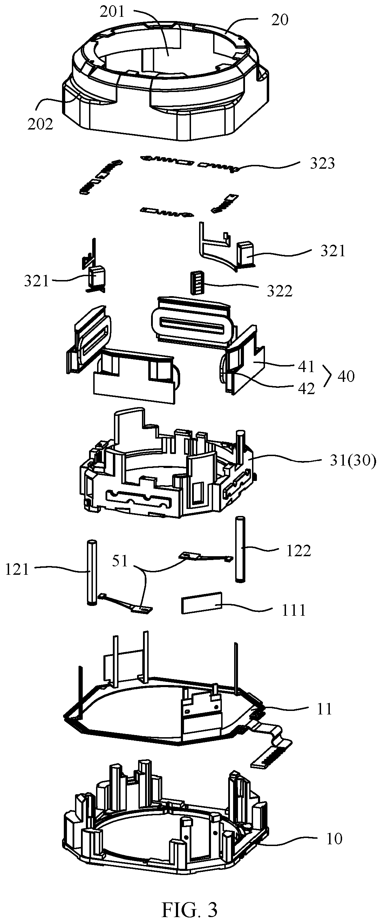

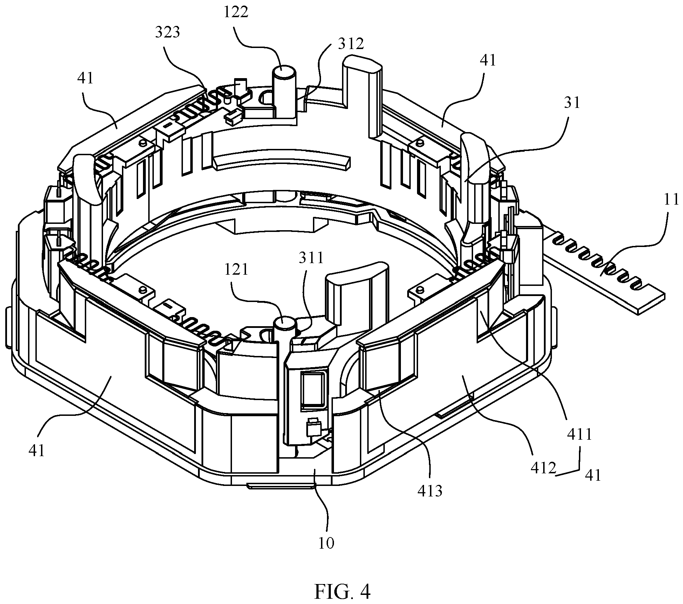

Refer to FIG. 3 and FIG. 4. FIG. 3 is an exploded view of a camera motor according to an embodiment of this application. FIG. 4 is a diagram of a structure in which a housing is hidden after the camera motor is assembled.

As shown in FIG. 3 and FIG. 4, the base 10 of the camera motor is fastened to a flexible circuit board (FPC, Flexible Printed Circuit) 11. The flexible circuit board 11 generally includes an integrated circuit. The base 10 is an injection molding part with a circuit conduction function. An electrical part is implemented by using injection molding metal, and the flexible circuit board 11 is welded to the injection molding metal in the base 10, to provide an electrical path for control of the integrated circuit.

The movable component 30 of the camera motor includes a carrier 31 configured to carry a camera lens (not shown in the figure). The drive unit 40 is disposed between the carrier 31 and the base 10, to provide a driving force for a focusing action of the carrier 31. The movable component 30 further includes another mechanical member that is fastened relative to the carrier 31 or that is fixedly disposed on the carrier 31.

In this implementation, the drive unit 40 includes a drive magnet 41 and a coil component 42. The drive magnet 41 is fastened relative to the base 10, and the coil component 42 is fastened relative to the carrier 31. A position of the drive magnet 41 corresponds to a position of the coil component 42. After the coil component 42 is energized, a moving charge is subject to a Lorentz force in a magnetic field of the drive magnet 41, to form a driving force for driving the carrier 31 to move relative to the base 10. It may be understood that the drive unit including the drive magnet 41 and the coil component 42 is commonly referred to as a voice coil motor (VCM, Voice Coil Motor) in the industry.

During application, a magnetic yoke (which is usually a soft magnetic material) may be coated on an outer side of the drive magnet 41, so that spreading of magnetic field leakage can be restricted, and magnetic induction lines can be converged, to enhance magnetic induction strength and improve a driving force of the drive unit 40. Certainly, if magnetic field strength generated by the drive magnet 41 is sufficient, the magnetic yoke may not be disposed.

In the examples shown in FIG. 3 and FIG. 4, there are four groups of drive magnets 41 and coil components 42 that fit with each other, where two groups are located on two opposite sides of the base 10, and the other two groups are located on two other opposite sides of the base 10.

In another implementation, a quantity and an arrangement of the drive magnets 41 and the coil components 42 may also be set based on a requirement. For example, only two groups may be disposed, and are located on two opposite sides of the base 10. Shapes and arrangements of the drive magnets 41 and the coil components 42 are also set in view of shapes of the base 10 and the carrier 31.

The flexible circuit board 11 of the camera motor is electrically connected with a sensing element 111, and the carrier 31 is relatively fastened to a Hall magnet 322. When the carrier 31 is driven by the drive unit 40 to move relative to the base 10, the Hall magnet 322 moves accordingly. When the sensing element 111 generates a changing magnetic field, the sensing element 111 determines a moving position of the carrier 31 based on changing magnetic field strength, to control a focusing position. The sensing element 111 may include a Hall sensor.

The camera motor further includes a power supply spring 323. One end of the power supply spring 323 is electrically connected to the coil component 42, and the other end is electrically connected to the flexible circuit board 11, to implement an electrical connection and a control channel required by the drive unit 40. The power supply spring 323 is usually a spring with low stiffness and conductivity. Because the coil component 42 moves with the carrier 31 during working, the power supply spring 323 with low stiffness may adapt to an application environment in which the coil component 42 needs to be deformed when moving, to ensure reliability of the electrical connection between the coil component 42 and the flexible circuit board 11.

In another implementation, alternatively, the drive magnet 41 may be fastened relative to the movable component 30 like the carrier 31, and the coil component 42 may be fastened relative to the base 10. In this case, the power supply spring 323 may not be disposed, and the electrical connection and the control channel between the coil component 42 and the flexible circuit board 11 may be implemented through a metal member injected in the base 10, or may be implemented through a conductive member in another form. A selection range is wide. Relatively, the drive magnet 41 has a large volume and a heavy weight. After the drive magnet 41 is fastened to the carrier 31, the drive magnet 41 also moves relative to the base 10 as a part of the movable component 30, and stability is poorer than that obtained in a case in which the coil component 42 is fastened to the carrier 31. Therefore, during actual disposing, the coil component 42 may be fastened relative to the carrier 31, and the drive magnet 41 may be fastened relative to the base 10.

As shown in FIG. 3, in this implementation, the camera motor further includes a housing 20. The housing 20 is fastened relative to the base 10, and is configured to cover a related component of the camera motor, to form protection. The housing 20 has an opening 201, the camera lens mounted on the carrier 31 may extend out of the housing 20 from the opening 201 during a focusing action. Disposing of the opening 201 can ensure that light can enter the camera lens, and a stroke of the camera lens is not limited in structure. In other words, disposing of the housing 20 should not affect an action of the movable component of the camera motor.

In this implementation, the drive magnet 41 specifically includes a first magnet 411 and a second magnet 412, the second magnet 412 supports the first magnet 411, and a step surface 413 facing away from the base 10 is formed between the first magnet 411 and the second magnet 412. It may be understood that the step surface 413 is a part of a face that is of the second magnet 412 and that faces the first magnet 411. In other words, the face that is of the second magnet 412 and that faces the first magnet 411 is greater than a supported surface of the first magnet 411. The housing 20 has a housing shoulder surface 202 fitting with the step surface 413. After assembly, the housing shoulder surface 202 of the housing 20 abuts against the step surface 413 of the drive magnet 41. This helps reduce a volume of the housing 20.

The camera motor further includes a guiding mechanism. The guiding mechanism is configured to guide reciprocation of the movable component 30 like the carrier 31, so that the movable component 30 moves in a direction of an optical axis of the camera lens, to ensure imaging quality. The optical axis is an imaginary axis in an optical system. In the camera module, the optical axis is a rotation center of the optical system. If light coincides with the optical axis, the light is transmitted in the optical axis in the optical system.

The guiding mechanism includes at least one guiding assembly. The guiding assembly includes a first guiding part and a second guiding part. One of the first guiding part and the second guiding part is fastened relative to the movable component 30 like the carrier 31, the other is fastened relative to the base 10, the first guiding part and the second guiding part abut against each other, and the first guiding part and the second guiding part are capable of sliding relative to each other in a direction parallel to the optical axis of the camera lens. In this way, a direction of movement of the carrier 31 relative to the base 10 is guided through limitation of the first guiding part and the second guiding part, and a position of the carrier 31 in the movement process can also be limited, to prevent a center of the camera lens mounted on the carrier 31 from deviating from the optical axis.

In this implementation, the guiding mechanism is provided with two guiding assemblies, and two second guiding parts are both in a form of a shaft member. For differentiation and description, the two second guiding parts of the two guiding assemblies are respectively referred to as a first shaft member 121 and a second shaft member 122 herein. Both the first shaft member 121 and the second shaft member 122 are fastened to the base 10. A first guiding part that fits with the first shaft member 121 is a V-shaped groove 311 formed on the carrier 31, and a first guiding part that fits with the second shaft member 122 is a guiding face 312 formed on the carrier 31, and the guiding face 312 may be understood as a form of a flat groove, that is, the guiding face 312 has only one groove wall.

As shown in FIG. 4, during actual arrangement, the two guiding assemblies are respectively located at two diagonal parts of the carrier 31, and may also be considered as two diagonal parts of the base 10, so that movement stability and guiding reliability of the carrier 31 can be further improved.

Further, a connection between a center of the first shaft member 121 and a center of the second shaft member 122 passes through a center of the optical axis of the camera lens, to help improve imaging quality.

During specific disposing, the first shaft member 121 abuts against two groove walls of the V-shaped groove 311, and the second shaft member 122 abuts against the guiding face 312. Under a clamping action of the two groove walls of the V-shaped groove 311, there is basically no relative movement between the first shaft member 121 and the V-shaped groove 311, and precise positioning can be implemented. The second shaft member 122 abuts against the guiding face 312, and an appropriate offset is allowed between the second shaft member 122 and the guiding face 312, to implement coarse positioning. In this way, guiding precision can be ensured, and processing and fitting precision of related components can be reduced.

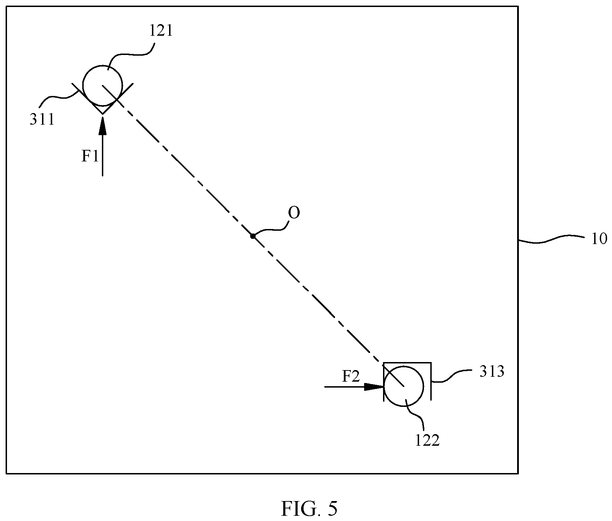

The first guiding part that fits with the first shaft member 121 may alternatively be in another form, for example, a right-angle groove, provided that the first guiding part has a first wall and a second wall, and the first shaft member 121 can abut against both the first wall and the second wall. The second guiding part that fits with the second shaft member 122 may alternatively be in another form, provided that the second guiding part has at least one third wall, and the second shaft member 122 abuts against the third wall. For example, the second guiding part may be a U-shaped groove 313 shown in FIG. 5. During application, the second shaft member 122 only needs to abut against any groove wall of the U-shaped groove 313, and a form of the U-shaped groove 313 can limit a relative movement amount of the second shaft member 122.

In this implementation, there is a magnetic attraction force between the first guiding part and the second guiding part of the guiding assembly, so that the first guiding part is closely attached to the second guiding part. In a process in which the carrier 31 drives the camera lens to move, the first guiding part is always closely attached to the second guiding part under an action of the magnetic attraction force. This can ensure accuracy of a movement direction of the carrier 31, and avoid affecting imaging quality due to deviation of the camera lens from the optical axis.

Still refer to FIG. 3. The guiding assembly further includes a magnetic attraction magnet 321 and a magnetic conductive member. In this example, the magnetic attraction magnet 321 is fastened relative to the carrier 31, and the magnetic conductive member is fastened relative to the base 10. Both the first shaft member 121 and the second shaft member 122 may be disposed as components having magnetic conductive performance. In this way, the first shaft member 121 and the second shaft member 122 are used as both guiding elements and magnetic conductive members, and the foregoing magnetic attraction force is generated between the magnetic attraction magnet 321 and the first shaft member 121 or the second shaft member 122.

It may be understood that a disposing position of the magnetic attraction magnet 321 corresponds to that of the magnetic conductive member, and a disposing principle is that the magnetic attraction force generated by the magnetic attraction magnet 321 and the magnetic conductive member can attract the first guiding part and the second guiding part to be closely attached.

Generally, a direction or an action point of the magnetic attraction force is not limited, but there is a preferred choice during arrangement. Refer to FIG. 5. Here, fitting of the first shaft member 121 and the V-shaped groove 311 and fitting of the second shaft member 122 and the U-shaped groove 313 are used as examples for description. In the figure, O is a virtual optical axis, and the connection line between the center of the first shaft member 121 and the center of the second shaft member 122 passes through the optical axis O. In the figure, a simple rectangle is used to illustrate the base 10. This indicates relative positions of related components, and is irrelevant to a specific structure. Here, an example in which the first shaft member 121 and the second shaft member 122 are components having magnetic conductive performance is used for description. When the magnetic attraction magnet 321 corresponding to the first shaft member 121 is arranged, a direction of a first magnetic attraction force F1 generated between the magnetic attraction magnet 321 and the first shaft member 121 coincides with a symmetric central line of the V-shaped groove 311. Alternatively, it may be understood that the direction coincides with an angular bisector of a V angle of the V-shaped groove 311. In this way, two groove walls of the V-shaped groove 311 each are closely attached to the first shaft member 121. When the magnetic attraction magnet 321 corresponding to the second shaft member 122 is arranged, a direction of a second magnetic attraction force F2 generated between the magnetic attraction magnet 321 and the second shaft member 122 is perpendicular to a groove wall that is of the U-shaped groove 313 and against which the second shaft member 122 abuts. This can prevent the second shaft member 122 from deviating in another direction. In the example shown in FIG. 5, the second shaft member 122 is closely attached to one groove side wall of the U-shaped groove 313. In another implementation, the second shaft member 122 may alternatively be closely attached to another groove side wall or a groove bottom wall of the U-shaped groove 313, and a position of the magnetic attraction magnet 321 is correspondingly changed.

The foregoing uses an example in which the first shaft member 121 and the second shaft member 122 have magnetic conductive performance. In another implementation, the first shaft member 121 and the second shaft member 122 may alternatively be common shafts, and do not have magnetic conductive performance. In this case, a magnetic conductive member that fits with the magnetic attraction magnet 321 may be separately disposed. Certainly, the direction or the action point of the magnetic attraction force between the magnetic conductive member and the magnetic attraction magnet 321 is still similar to the foregoing setting. Details are not described again.

When the magnetic conductive member is an independent component, one of the magnetic conductive member and the magnetic attraction magnet 321 is fastened relative to the base 10, and the other is fastened relative to the movable component 30 like the carrier 31. Specifically, the magnetic attraction magnet 321 is fastened relative to the base 10, and the magnetic conductive member is fastened relative to the carrier 31. Alternatively, the magnetic attraction magnet 321 is fastened relative to the carrier 31, and the magnetic conductive member is fastened relative to the base 10.

In actual application, to reduce processing precision of two groove wall surfaces of the V-shaped groove 311 and ensure that the first shaft member 121 can abut against the two groove wall surfaces of the V-shaped groove 311, protrusion structures may be disposed on the two groove wall surfaces of the V-shaped groove 311. At least two protrusion structures may be disposed on each groove wall surface, the at least two protrusion structures are spaced from each other in a length direction of the first shaft member 121, and the V-shaped groove 311 moves with the carrier 31, provided that the protrusion structures can always ensure abutting against the first shaft member 121. When two protrusion structures are disposed on each groove wall surface, the two protrusion structures may be disposed at two ends of the V-shaped groove 311, to ensure a length of fitting between the first shaft member 121 and the V-shaped groove 311, namely, a length of the first shaft member 121 between two abutting points.

Similarly, a protrusion structure may also be disposed on a groove wall surface that is of the guiding face 312 or the U-shaped groove 313 and that fits with the second shaft member 122, so that the second shaft member 122 abuts against the protrusion structure, to reduce difficulty in processing flatness of the groove wall surface of the guiding face 312 or the U-shaped groove 313.

The foregoing descriptions are provided by using an example in which the first guiding part (the V-shaped groove 311 and the guiding face 312 or the U-shaped groove 313) is fastened relative to the carrier 31, and the second guiding part (the first shaft member 121 and the second shaft member 122) is fastened relative to the base 10. In actual application, alternatively, the first guiding part may be fastened relative to the base 10, and the second guiding part may be fastened relative to the carrier 31.

**In** addition, the foregoing uses an example in which the second guiding part is a shaft member for description. In actual application, the second guiding part may alternatively be in another structural form. For example, the second guiding part includes several balls, and the several balls are arranged in a direction parallel to the optical axis. In comparison with the case in which the second guiding part is the shaft member, when the second guiding part is disposed as a ball, contact between the first guiding part and the ball is point contact, so that friction between the first guiding part and the ball can be reduced, and a favorable condition is provided for a quick response to focusing. During specific application, the two second guiding parts of the two guiding assemblies may be both set as balls, or one of the second guiding parts may be set as a shaft member, and the other may be set in a form of a ball.

**In** another implementation, if an assembly condition, a processing condition, or the like is met, the two first guiding parts that cooperate with the shaft member or the ball structure may be set in a structural form of the V-shaped groove 311. Certainly, if a guide requirement is not high, the two first guiding parts may alternatively be both disposed in a structural form of the guiding face 312 or the U-shaped groove 313.

In another implementation, another quantity of guiding assemblies, for example, one guiding assembly or more than three guiding assemblies, may be further disposed in the guiding mechanism. However, in consideration of guiding reliability and action stability of the movable component 30 like the carrier 31, more than two guiding assemblies may be disposed.

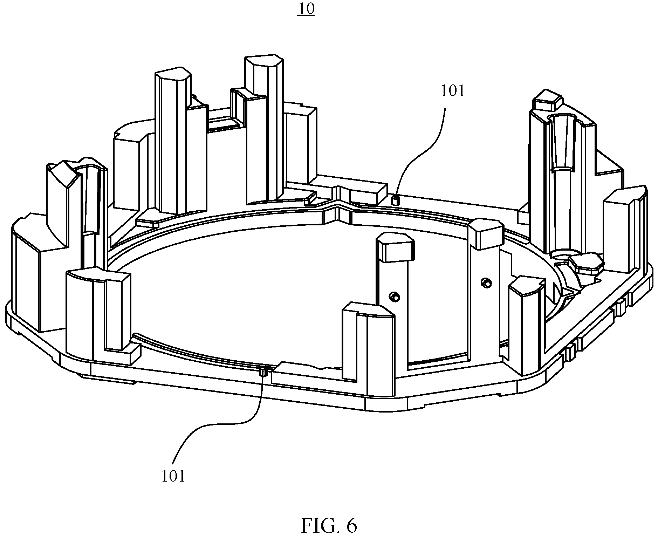

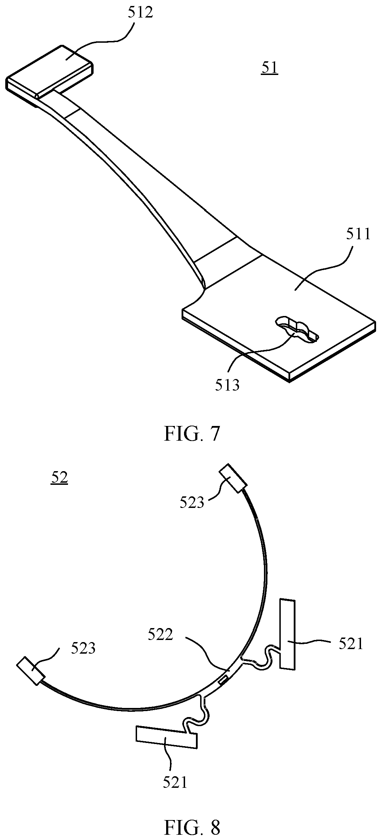

Refer to FIG. 6 and FIG. 7 together. FIG. 6 is a diagram of a structure of the base in FIG. 4. FIG. 7 is a diagram of a structure of an elastic member in a specific application.

With reference to FIG. 3, in this implementation, the elastic member 50 disposed between the base 10 and the carrier 31 is a first elastic member 51. Two first elastic members 51 are specifically disposed, and may be symmetrical relative to a center of the camera motor during arrangement. This ensures stability and reliability of an action of the movable component 30 like the carrier 31 in the ejection stroke.

The first elastic member 51 includes a fixed end 511 and a free end 512, and the fixed end 511 is fastened to the base 10. In the example shown in the figure, the fixed end 511 is provided with a fastening hole 513, and a positioning protruding part 101 is disposed at a corresponding position of the base 10. The fixed end 511 of the first elastic member 51 may be fixedly sleeved on the positioning protruding part 101 through the fastening hole 513. The free end 512 of the first elastic member 51 may be in contact with only the carrier 31. During assembly, the carrier 31 is press-fitted on the free end 512 of the first elastic member 51.

The fixed end 511 of the first elastic member 51 may alternatively be fastened to the base 10 in a manner like welding or hot melting.

In addition to the forms shown in FIG. 3 and FIG. 7, a structural form of the elastic member 50 may be a form shown in FIG. 8. To distinguish from the first elastic member 51, the elastic member 50 shown in FIG. 8 is referred to as a second elastic member 52.

The second elastic member 52 includes fixed parts 521 that are fastened to the base 10 and free parts 512. The free parts 512 are further connected to a power supply integration part 513. The second elastic member 52 is used as a power structure of the ejection stroke, and is used as an electrical connector for implementing an electrical connection between another control path or driving piece and the flexible circuit board 11. As shown in FIG. 8, an irregular bending structure between the fixed part 521 and the free part 512 can ensure structural strength of the second elastic member 52, and help control an ejection stroke amount of the second elastic member 52 driving the carrier 31 to move. A specific form of the irregular bending structure may be determined based on an application requirement through an experiment or simulation.

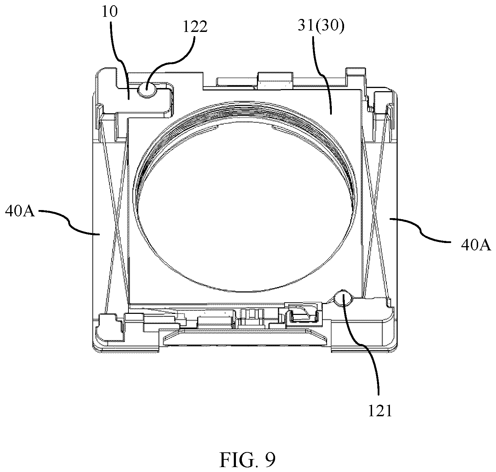

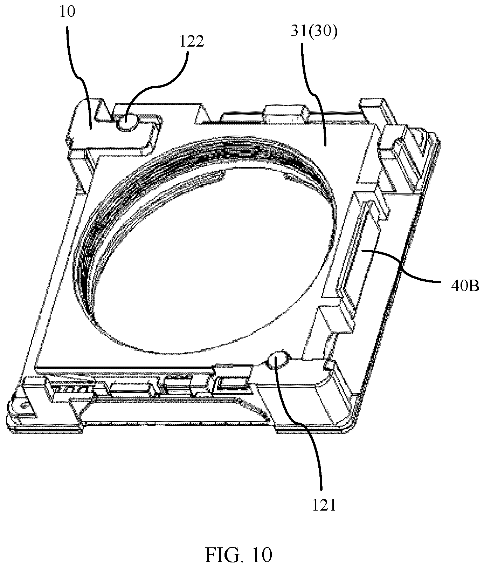

In the foregoing implementations, a structure of the camera motor is described by using an example in which the drive unit 40 is a voice coil motor. In another implementation, the drive unit 40 may alternatively be in another form, for example, the SMA driver 40A shown in FIG. 9 or the piezoelectric ceramic driver 40B shown in FIG. 10. The SMA driver 40A drives, based on a feature that a shape memory alloy wire shrinks after being energized, the movable component 30 to move in a direction of the optical axis, to implement a focusing function. The piezoelectric ceramic driver 40B generates regular deformation through piezoelectric ceramics, and a resonance sheet viscously connected to the piezoelectric ceramics amplifies the deformation, and generates a regular up-down switching action. The movable component 30 is switched to move in the direction of the optical axis, to implement a focusing function. Components in FIG. 9 and FIG. 10 that have same functions as those in FIG. 3 and FIG. 4 are marked by using a same reference numeral.

It may be understood that, regardless of a form of the drive unit 40, the drive unit 40 may be combined with the foregoing guiding mechanism to guide and position an action of the movable component 30.

Another implementation of this application provides a camera module. The camera module includes a camera lens and the camera motor described above. The camera lens is mounted on the movable component 30 (for example, a carrier 31) of the camera motor, and the camera motor drives the camera lens to extend and retract to implement focusing. It may be understood that, during working, like the movable component 30, the camera lens includes an ejection stroke and a focusing stroke.

Still another implementation of this application provides an electronic device. The electronic device includes a housing and the foregoing camera module. The camera module is disposed in the housing, and the camera module enables the electronic device to implement image obtaining, instant video communication, or the like. The electronic device may be a mobile or fixed terminal having a video recording function, for example, a mobile phone, a tablet computer, a notebook computer, a wearable device, or a smartwatch.

In this specification, "first", "second", and "third" are used only to distinguish between different components with a same function, and do not indicate that these components have a sequence, a primary/secondary relationship, or the like.

Specific cases are used herein for illustrating principles and implementations of this application. The descriptions about embodiments are merely for understanding the methods and core ideas of this application. It should be noted that a person of ordinary skill in the art may make several improvements and modifications to this application without departing from the principles of this application, and the improvements and modifications also fall within the protection scope of the claims of this application.

## Claims

1. A camera motor, comprising a base, a drive unit, and a movable component, wherein
an elastic member is disposed between the movable component and the base;
under an action of an external force and the elastic member, the movable component is capable of switching between a retraction position that is close to the base and an ejection position that is away from the base, wherein the external force comprises a force applied to the movable component in a direction toward the base; and
the drive unit is configured to drive the movable component at the ejection position to reciprocate relative to the base.

2. The camera motor according to claim 1, wherein the camera motor further comprises a guiding mechanism, and the guiding mechanism is configured to guide reciprocation of the movable component, so that the movable component moves in a direction parallel to an optical axis of a camera lens.

3. The camera motor according to claim 2, wherein the guiding mechanism comprises at least one guiding assembly, the guiding assembly comprises a first guiding part and a second guiding part, one of the first guiding part and the second guiding part is fastened relative to the movable component, the other is fastened relative to the base, the first guiding part and the second guiding part abut against each other, and the first guiding part and the second guiding part are capable of sliding relative to each other in the direction parallel to the optical axis.

4. The camera motor according to claim 3, wherein the second guiding part is a shaft member, and an axis direction of the shaft member is parallel to the optical axis; or the second guiding part comprises several balls, and the several balls are arranged in the direction parallel to the optical axis.

5. The camera motor according to claim 3 or 4, wherein the guiding mechanism comprises two guiding assemblies, and the two guiding assemblies are respectively located at two diagonal parts of the movable component.

6. The camera motor according to claim 5, wherein in the two guiding assemblies, a 1^{st} first guiding part comprises a first wall and a second wall, a 1^{st} second guiding part abuts against both the first wall and the second wall, a 2^{nd} first guiding part comprises a third wall, and a 2^{nd} second guiding part abuts against the third wall.

7. The camera motor according to claim 5 or 6, wherein in the two guiding assemblies, a connection line between centers of the two second guiding parts passes through a center of the optical axis.

8. The camera motor according to any one of claims 3 to 7, wherein there is a magnetic attraction force between the first guiding part and the second guiding part, so that the first guiding part is closely attached to the second guiding part.

9. The camera motor according to claim 8, wherein the guiding assembly further comprises a magnetic conductive member and a magnetic attraction magnet, and the magnetic attraction force is generated between the magnetic conductive member and the magnetic attraction magnet; one of the magnetic conductive member and the magnetic attraction magnet is disposed on the movable component, and the other is disposed on the base, or the second guiding part is a component having magnetic conductive performance; and the magnetic attraction magnet is fastened relative to the first guiding part.

10. The camera motor according to any one of claims 1 to 9, wherein the drive unit comprises a drive magnet and a coil component, one of the drive magnet and the coil component is fastened relative to the movable component, the other is fastened relative to the base, and a position of the coil component corresponds to a position of the drive magnet.

11. The camera motor according to claim 10, wherein the drive magnet is fastened relative to the base, the coil component is fastened relative to the movable component, the drive magnet comprises a first magnet and a second magnet, the second magnet supports the first magnet, and a step surface facing away from the base is formed between the second magnet and the first magnet; and the camera motor further comprises a housing, the housing is fastened relative to the base, and covers the drive magnet, and the housing has a housing shoulder surface fitting with the step surface.

12. The camera motor according to any one of claims 1 to 9, wherein the drive unit is an SMA driver or a piezoelectric ceramic driver.

13. The camera motor according to any one of claims 1 to 12, wherein the camera motor further comprises the housing, the housing is fastened relative to the base, the housing has an opening, and the movable component is capable of extending out of the opening in reciprocation.

14. The camera motor according to any one of claims 1 to 13, wherein the external force is provided by the drive unit.

15. A camera module, comprising a camera lens and a camera motor, wherein the camera motor is the camera motor according to any one of claims 1 to 14, and the camera lens is mounted on the movable component of the camera motor.

16. An electronic device, comprising a housing and a camera module, wherein the camera module is mounted in the housing, and the camera module is the camera module according to claim 15.

17. The electronic device according to claim 16, wherein the electronic device further comprises a member and a drive component, the drive component is configured to generate the external force, and the external force acts on the movable component through the member.
